# EUROPEAN PATENT APPLICATION

(11) **EP 3 882 811 A1**
(43) Date of publication of application: **22.09.2021**
(21) Application number: 20163515.8
(22) Date of filing: 17.03.2020
(51) Int. Cl.: G06K 9/00, G06K 9/62, G06T 7/292, G06K 9/20

(54) **SYSTEM AND METHOD OF TRACKING AT LEAST ONE ITEM OF A SPORTS ACTIVITY**

(71) Applicant: Swiss Timing Ltd., 2606 Corgémont (CH)
(72) Inventor: HIEMANN, M. Alexander, 04105 Leipzig (DE); POMMRENKE, Hendrik, 04157 Leipzig (DE)
(74) Representative: ICB SA

(57) **Abstract**

The disclosure concerns a system and method for tracking an item (1) of a sports activity, the system comprising:
- a data transmission network (30),
- at least a first and a second camera unit (10, 60) connected to the data transmission network (30), the first and second camera units (10, 60) each comprise a camera (11, 61) and a an image processor (16, 66), wherein the camera (11, 61) is operable to capture a sequence of images and wherein the image processor (16, 66) is operable to process the sequence of images and is further operable to recognize the item (1) in the sequence of images and to generate item specific data on the basis of the item recognition,
- wherein the image processors (16) being operable to transmit the item specific data via the data transmission network (30) to another image processor (66) and/or to a central processor (34) connected to the data transmission network (30).

## Description

### Field of the invention

The present disclosure relates to a system and to a method for tracking an item of a sports activity. In particular, the system and method relate to the field of camera-based tracking and time measurement of an item in a sports activity. The items may be represented by an object or by a person taking part in the sports activity.

### Background of the invention

In recent years, there has been an increasing demand for reliable and objective evaluation of sport specific data. For instance, the movement of an athlete or of sports equipment, such as balls or rackets should be analyzed in detail to gain a deeper insight into the kinematics of the sports activity. In addition, for time measurement as well as for broadcasting of sports events, it is desirable to provide a detailed analysis of three-dimensional trajectories of individual items visible in an image captured by a camera. A time resolved tracking of a movement of an item of a sports activity allows the assessment of the physical performance and tactical behavior of athletes. It can yield helpful feedback for athletes, coaches and referees.

Moreover, spectators of the sports event can be supplied with additional information about the performance of the athlete and/or about a trajectory of an item of a sports activity. A movement and/or a time resolved trajectory of an item of a sports activity can be generally acquired and determined on the basis of image analysis. Such images or a sequence of images can be obtained by one or multiple cameras. For instance, the patent US 5,363,297 describes a multi-camera set up, wherein all cameras are individually connected to a central processing unit. There, the central processing unit conducts all image processing and item positioning tasks.

Depending on the number of cameras in a multi-camera system, the processing of the sequence of images provided by all of these cameras with a single central processing device is rather challenging. Image ingest processes as well as modern image recognition algorithms are quite resource demanding and therefore require a rather powerful, hence high-performance hardware that is capable of processing multiple inputs simultaneously. Furthermore, the centralized processing of a multiplicity of individual camera signals, such as uncompressed image data by a single central processing unit leads to a comparatively high network load. So, for a real-time and multiple image processing, there must be provided a comparatively high bandwidth for the network traffic between individual cameras and the central processing unit.

It is therefore a demand to provide an improved system and a method for tracking an item of a sports activity, wherein the system and the method are implementable more easily. It is a particular aim to reduce the hardware requirements for a central processing unit. Moreover, the system for tracking of an item in a sports activity should be easily reconfigurable. The system and the method should be easily adaptable to varying demands, both in terms of the type of sports activity as well as in terms of accuracy and data processing demands.

### Summary of the invention

The above described demands will be solved by a system for tracking of an item and by a method for tracking an item of a sports activity in accordance to the features of the independent claims. Further features of the invention are subject matter of the dependent claims.

In one aspect, there is provided a system for tracking an item of a sports activity. The system comprises a data transmission network. The system further comprises at least a first camera unit connected to the transmission network. With some examples, the at least first camera unit is not permanently connected to the network but is connectable to the data transmission network. The first camera unit comprises a first camera and a first image processor. The first camera is operable to capture a sequence of images.

Typically, the first camera is operable to capture a sequence of images, wherein the item is visible in the respective image sequence. The first image processor of the first camera unit is operable to process the sequence of images captured by the first camera. The first image processor is further operable to recognize the item in the sequence of images. The first processor of the first camera unit is also configured and operable to generate first item specific data on the basis of the respective item recognition. Hence, the first image processor is operable to the sequence of images obtained from the first camera in such a way, that the item, e.g. a particular or predefined item, is recognized in the sequence of images and in that at least first item specific data being characteristic of at least one of the position, the orientation, the state of movement or trajectory of the item is generated on the basis of the item recognition.

The system further comprises at least a second camera unit connected to the data transmission network. With some examples, the at least second camera unit is connectable to the data transmission network. Like the first camera unit also the second camera unit may be either permanently or non-permanently connected to the data transmission network. The second camera unit comprises a second camera and a second image processor. The second camera is operable to capture a sequence of images. The second image processor is operable to process the sequence of images obtained from the second camera. The second image processor is further operable to recognize the item in the sequence of images obtained from the second camera and to generate second item specific data on the basis of the respective item recognition.

Generally speaking, the first camera unit and the second camera unit may be implemented quite similarly or even identically. The first camera unit and the second camera unit may comprise similar or identical hardware components. The functionality of the first camera unit and the functionality of the second camera unit may be substantially equal.

Furthermore, the first image processor of the first camera unit is operable to transmit the first item specific data via the data transmission network to the second image processor. Additionally or alternatively, the first image processor is operable to transmit the first item specific data by the data transmission network to a central processor. The central processor is connected to the data transmission network. With some examples, the central processor is connectable to the data transmission network in a data transmitting manner. Here, the central processor may be permanently or non-permanently connected to the data transmission network.

Typically, and with some examples, the first item specific data represents condensed data being representative of at least one of the position, the orientation or momentary state of movement and a trajectory of the at least one item of the sports activity. The first item specific data may be void of image data. The item specific data may comprise only condensed data obtained or derived from the processing of the sequence of images obtained or captured by the first camera. In particular, the first image processor is configured to extract item related data from the sequence of images obtained from and/or provided by the first camera. In this way, the network load, hence the data transmission rate between the first camera unit and the second camera unit or between the first camera unit and the central processor can be substantially reduced.

The same may also apply to the second item specific data process and provided by the second image processor on the basis of a sequence of images captured and provided by the second camera. The system is by no way limited to only a first camera unit and a second camera unit. It is generally scalable and expandable to a larger number of multiple camera units. With some examples, the system comprises at least 4 camera units, at least 8 camera units, at least 12 camera units or at least 16 camera units, that are typically spatially distributed across or around a sports arena or stadium.

Typically, the item specific data requires only a fraction of data transmission bandwidth compared to the original, e.g. uncompressed image data provided by the first or second cameras. The computational load required for tracking of the item is shifted towards the first and second camera units. The first and second camera units, in particular the first and second camera specific image processors are configured to pre-process or to process the respective sequences of images provided by the first and second cameras, respectively.

At least one, preferably both, the first and the second image processors are configured to recognize the item in the respective sequence of images and to generate first or second item specific data on the basis of the item recognition. For the purpose of tracking of the item of the respective sports activity, it is generally sufficient when only first item specific data and/or second item specific data is transmitted via the data transmission network. In this way, the network load can be reduced. This allows further to reduce the technical demands and requirements for the hardware components for setting up a respective data transmission network. In view of this, the costs for setting up such a data transmission network can be reduced. With some examples the system may be even built on the basis of existing data transmission networks, such as an Ethernet or an existing Wi-Fi environment.

Typically, there is provided a one-to-one assignment between the first camera and the first image processor. The first camera unit may consist of the first camera and the first image processor. The first camera and the first image processor may form or constitute a first smart camera. In effect, the first camera unit, e.g. the first smart camera provides a processing, at least a pre-processing of the sequence of images and further provides a data output that may be reduced to the item specific data. The same may equally apply also to the second camera unit and all further camera units, mutatis mutandis.

By providing a processing or at least a pre-processing of the sequence of captured images directly by the first or second camera units, the hardware requirements for a central processor can be reduced accordingly. Here, rather conventional or readily available hardware components can be used to set up a central processor capable to process e.g. first item specific data received from the first camera unit connected to the data transmission network and to process second item specific data received from the second camera unit received via the data communication network.

According to a further example, the second image processor is operable to transmit the second item specific data via the data transmission network to at least one of the first image processor and the central processor.

With some examples, the first camera unit is operable to transmit the first item specific data to at least one of the second camera unit and the central processor. Here, the second camera unit, in particular the second image processor, may be configured to receive and to process the first item specific data and to combine the first item specific data with the second item specific data. On the basis of processing first and second item specific data, the item of interest may be tracked in three-dimensional space over time.

With some examples, the second image processor is configured to generate the second item specific data and to process both, the second item specific data and the first item specific data to provide a tracking of the item, e.g. in three dimensions over time.

With some other examples, the second image processor may be configured to generate the second item specific data on the basis of the sequence of images obtained from the second camera unit. The second image processor may be further configured to receive the first item specific data and to combine first and second item specific data. The combination of first and second item specific data may be performed or conducted on the basis of a common clock signal. Insofar, first and second item specific data may be synchronized in time, e.g. by the second image processor.

With some further examples, the second image processor is capable to process the first item specific data and the second item specific data in order to provide a tracking of the item over time. For such examples, a central processor may not be required. The entire system for tracking of an item may be void of a separate central processor. A central processing routine, i.e. a combined processing of first and second item specific data may be performed and provided by the second image processor.

With some other examples, wherein the second image processor is configured to receive and to synchronize the first item specific data with the second item specific data, the second image processor may be configured to transmit the combination of first and second item specific data to the central processor by the data transmission network. Here, the further processing of first and second item specific data is then performed by the central processor. It is then the central processor that provides a three-dimensional tracking of the item of the sports activity.

With other examples, the first and the second image processors of first and second camera units swap roles. Here, it may be the second camera unit, hence the second image processor that is operable to transmit the second item specific data via the data transmission network to the first image processor, hence to the first camera unit. Then, it may be the first camera unit that is capable to pre-process or to process both, the first item specific data and the second item specific data. Also here, the first camera unit may be configured to synchronize the first and second item specific data and/or to transmit the first and second item specific data to the central processor.

According to a further example, at least one of the first image processor and the second image processor is operable to transmit the first item specific data via the data transmission network without the sequence of images obtained from the first camera unit or second camera unit. Hence, the first image processor may be configured to extract or to generate the item specific data on the basis of an item recognition in the sequence of images provided by the first camera. It is only this type of condensed data that is actually transmitted via the data transmission network. This condensed data being illustrative of the item of interest in the sequence of images.

With some examples, both, the first image processor and the second image processor are operable to transmit respective first and second item specific data via the data transmission network without image data. In this way, the network load can be substantially reduced.

In effect, the image processing or image pre-processing provided by at least one of the first and second image processors provides a decentralized approach to reduce computational demands for the central processor and/or to reduce network traffic and network load.

According to another example, at least the first camera unit comprises a housing. The first camera and the first image processor are arranged inside the housing. With this example, the first image processor may be integrated into the first camera. Components of first camera, e.g. an image sensor as well as components of the first image processor may be provided or located on a common printed circuit board. In this way, a highly integrated architecture for the first camera unit can be provided. Integrating the first processor in the housing of the first camera unit provides a rather space saving and compact design for the tracking system as well as for the respective camera units.

With another example, the first image processor is located remote from the first camera. The first image processor and the first camera may be then connected via the data transmission network.

Even though the first image processor and the first camera may be spatially separated from each other, there is still a one-to-one assignment or one-to-one mapping between the first image processor and the first camera. Typically, the first image processor is located outside a housing of the first camera. It may be arranged at a distance from the first camera. The same might be valid for the second camera unit. Also here, the second image processor may be located remote from the second camera. The second image processor and the second camera may be connected via the data transmission network. The data transmission network between the numerous image processors and the assigned cameras may provide a suitable bandwidth. Such a data transmission network may be implemented as a fiber-optical network in order to provide uncompressed transmission of numerous sequences of images between at least the first camera and the first image processor and between the second camera and the second image processor, respectively.

The first image processor and the second image processor may be arranged in a common processor arrangement or pre-processing unit. Here, the pre-processing unit may provide pre-processing of the sequence of images obtained from first and second cameras, respectively. The pre-processing unit comprises a number of image processors, wherein each image processor is individually assigned or mapped to an individual camera. Moreover, each camera is assigned and mapped to only one image processor.

With this example, the system may comprise a central processor in addition to the pre-processing unit. Typically, the pre-processing unit is operable to provide the above-mentioned functionality of first and second image processors. The pre-processing unit is particularly operable to generate and to provide at least first and second item specific data. The at least first and second item specific data can be further transmitted to the central processor via the data communication network.

With some examples, the system for tracking of an item may be void of such a central processor. Then, the pre-processing unit or an individual preprocessor of the pre-processing unit is operable to process at least first and second item specific data to provide at least a two-dimensional or three-dimensional tracking of the item over time.

According to another example, at least one of the first image processor, the second image processor and the central processor is operable to determine a three-dimensional position or three-dimensional pose of the item on the basis of the first item specific data and the second item specific data. Typically, only one of the first image processor, the second image processor and the optional central processor will be operable to generate the three-dimensional position of three-dimensional pose of the item.

With some examples, the system may be configured to dynamically reorganize itself. Hence with some examples, the first image processor, the second image processor and the central processor may be each configured to determine the three-dimensional position or three-dimensional pose of the item on the basis of at least the first item specific data and the second item specific data over time. In the event, that at least one of these components, hence the first image processor, the second image processor and the central processor should be unavailable, e.g. due to a network failure, the system may dynamically reorganize in such a way, that e.g. the function of the central processor is entirely provided by at least one of the first image processor and the second image processor. In this way, the system for tracking of the item is highly redundant and scalable. Failure of at least one of the first image processor, the second image processor or the central processor can be compensated by any other of the first image processor, the second image processor and the central processor, and vice versa.

According to a further example, the system for tracking an item of a sports activity generation of the first item specific data or second item specific data on the basis of the captured sequence of images includes at least one of image classification, object or item detection, semantic segmentation or pose-estimation of the item. Moreover and according to a further example, generation of the first item specific data includes generation or deriving of Meta data from the item recognized in the sequence of images of the first camera and/or in the sequence of images of the second camera. Deriving or generating first or second item specific data on the basis of item recognition in the sequence of images derived from the first camera and/or from the second camera includes detecting and/or identifying characteristic points in the image or sequence of images.

Generation or deriving of item specific data may include three-dimensional position calculation, e.g. based on taking particular points from individual images or from a sequence of images of an individual camera. It may further include or comprise a two-dimensional skeletonization in the image plane from the sequence of images obtained from the first camera and/or from the second camera, respectively. Based on the two-dimensional skeletonization a human pose estimation, i.e. a skeleton recognition in three-dimensional space may be conducted. Moreover, a two-dimensional image segmentation in the image or sequence of images of at least one of the first camera and the second camera may be conducted by at least one or two of the first image processor, the second image processor and, if available, the central processor.

According to another example, the first item specific data generated by the first image processor is of a first data type. The second item specific data generated by the second, hence by another image processor is of a second data type. First and second data types may be the same or may be different. With some examples, wherein the first data type and the second data type are different, the hardware of the respective first and second cameras as well as the hardware used for the respective first and second image processors assigned to the first and second cameras, respectively, can be adapted accordingly.

Rather cost-efficient and hence low power cameras or low power image processors may be used for rather simple detection tasks. Such low-cost or comparatively simple hardware components may provide a rather simple detection or recognition task. Other cameras and/or associated image processors may provide a higher degree of performance and hence a higher degree of computational power. They may provide rather sophisticated computational performance. They may be used for rather complex recognition and/or item specific data calculation, such as pose estimation.

Accordingly, the system may be equipped with at least two, preferably with numerous camera units, each of which being assigned to a particular recognition or item specific data calculation task. Depending on the assigned task, differently configured and demand-specific camera units can be used. In this way, the system can be individually adapted to particular recognition demands. Different camera units configured to provide different types of data may be interchanged in accordance to the particular recognition demands of the respective sports activity.

For instance, a system configured for tracking an item in a soccer game has to fulfill quite different demands compared to a system for tracking an item for a table tennis match. For each sports activity, the system may be freely reconfigured. The number of camera units used and their spatial distribution may be individually adapted to the respective sports activity. The data link to the transmission network may be implemented in a self-organizing way. Hence, the camera unit may be provided with a network controller. The network, in particular a network switch may be configured and operable to organize or to dynamically reorganize the data traffic on the network. Moreover, the network itself, typically a network switch may be configured and operable to dynamically modify the configuration of the network, both in terms of the total number of camera units and the type of camera units, wherein different types of camera units provide different item related data types as described above.

According to another example, at least the first image processor comprises an image input, a data output and a data input. The image input is connected to the first camera. At least one of the data output and the data input is connectable or is connected with at least one of the central processor and the second image processor via the data transmission network. The first image processor is operable to receive a sequence of images from the first camera via the image input. Typically, the first image processor comprises a digital signal processor to process the sequence of images. The first image processor may comprise an image buffer, hence a data storage. The first image processor may further comprise a data manager, an image pre-processor and an item recognizer. These components may be implemented by a software of the digital image processor. The item recognizer may be connected to the data output. Typically, the item recognizer is configured and/or operable to generate the item related data and to transmit the item related data to the data output. Via the data output the item related data is either transmitted to the central processor or to the second image processor via the transmission network.

The data input of the first image processor is connectable or is connected to the data transmission network. By way of the data input item related data, e.g. produced and provided by some other image processor of the system may be received and may be further processed or pre-processed in order to execute at least one of image processing, image pre-processing, item recognition or derivation of item related data.

According to a further example, the data transmission network is a wireless data transmission network. The first camera unit comprises a first wireless transducer and the second camera unit comprises a second wireless transducer. First and/or second wireless transducers are connected to the wireless network for transceiving first item specific data and second item specific data, respectively. Due to the image processing or image pre-processing provided by the individual camera units, the network load can be drastically reduced compared to prior art solutions, wherein the entire data stream or image stream has to be transmitted to a central processor.

By reducing the network load and/or reducing the amount of data per time unit to be transmitted between individual camera units across the transmission network and/or between individual camera units and the central processor, the entire network architecture can be implemented as a wireless network. In this way, configuration and reconfiguration of the system, both in terms of positioning of numerous camera units, e.g. around a sports competition arena can be facilitated.

Moreover, with a wireless network there is no longer a need to establish a wired connection between first and second or multiple camera units among each other and/or with a central processor.

According to a further example, the data transmission network comprises a network switch. At least two of the first camera unit, the second camera unit, the optional further camera unit and the central processor are interconnected by the network switch. Typically, all components of the system, hence an optional central processor, first and second camera units and/or even further camera units can be interconnected by the data transmission network via a single or by multiple network switches. The network switch is operable to organize and to manage the data transmission across the network and hence between first and second camera units and/or between individual camera units and the optional central processor.

According to another example, the system for tracking an item of a sports activity comprises a clock generator. At least two of the first camera unit, the second camera unit and the central processor are coupled to the clock generator via the data transmission network. Typically, all components taking part in the network traffic of the data transmission network of the present system are coupled to the clock generator.

With some examples, each component of the system, hence each camera unit as well as the central processor may comprise an individual clock generator, wherein the clock generators of the camera units and of the optional central processor may be synchronized by the network. With other examples, it is e.g. the network switch that is provided with a clock generator that provides a synchronization signal, hence a clock for all network components that are interconnected in a data transmitting manner by the data transmission network.

With the clock generator individual data or signals, e.g. item specific data of the first camera unit as well as item specific data provided by the at least second camera unit can be synchronized. The synchronized data can be further processed by at least one of the first and second camera units or by the central processor in order to direct three-dimensional item specific data, such as position, orientation, state of movement or trajectory of the item of interest.

According to another aspect, the disclosure also relates to a method of tracking an item of a sports activity. The method comprises the steps of providing of a data transmission network operable to provide a data transmission between at least two of a first camera unit, a second camera unit and a central processor. Here, the central processor is only optionally provided. The method further comprises the step of capturing of a first sequence of images with a first camera of the first camera unit. The first sequence of images is then processed with a first image processor of the first camera unit. Moreover, the item in the first sequence of images is recognized with the first image processor. Thereafter, first item specific data is generated with the first image processor on the basis of the item recognition.

Concurrently with capturing of the first sequence of images and processing of the sequence of images, there is also captured a second sequence of images with a second camera of a second camera unit. The second sequence of images may be processed in a similar way compared to the processing of the first sequence of images. In particular, the second sequence of images is processed or pre-processed by a second image processor of the second camera unit. Moreover, the item of interest is also recognized in the second sequence of images with the second image processor. Thereafter, second item specific data is generated with the second image processor on the basis of the item recognition.

The method further comprises transmitting at least the first item specific data to at least one of the second camera unit and the central processor via the data transmission network. Alternatively or additionally, the method comprises the step of transmitting at least the second item specific data to at least one of the first camera unit and the central processor via the data transmission network.

With some examples, the data transmission network, hence the system for tracking the item of the sports activity is void of a central processor. Then, the method comprises the step of transmitting at least the first item specific data to the second camera unit via the data transmission network and/or transmitting of the second item specific data to the first camera unit via the data transmission network.

With some examples and wherein the data transmission network is equipped with or connected to the central processor, the method may comprise exclusively transmitting item specific data from the first camera unit to the central processor via the data transmission network. Additionally or concurrently also the second item specific data may be transmitted via the data transmission network to the central processor.

The method is by no way limited to the use of only a first and a second camera unit. The method is particularly dedicated and configured to make use of numerous camera units, such as at least 3, 4, 6, 8, 10, 12, 16 or even more camera units, each of which being equipped with a camera and an image processor. Each one of the camera units is connected to or is connectable to the data transmission network. Each one of the camera units is operable to capture a sequence of images and to process the sequence of images and to derive respective item specific data on the basis of an item recognition.

All these image processing steps are provided by each camera unit itself. The item specific data generated and provided by each one of the first camera unit may be shared and exchanged with other camera units via the data transmission network. The amount of item specific data per time unit is less than the amount of image data per time unit as provided by the respective camera of a camera unit. In this way, each camera unit of the present system and/or method is operable and configured to extract relevant data of interest from a captured sequence of images. It may be only the compressed data, hence the item specific data that is shared and exchanged among the camera units and/or the central processor by the data transmission network. In this way, network load as well as computational demands for the central processor can be effectively reduced, thus allowing to implement a high-performance system and method for tracking an item of a sports activity by making use of hardware components that are available at low or moderate costs.

Generally, the system for tracking an item of a sports activity as described above is closely or directly correlated to the above-mentioned method of tracking an item of a sports activity. Insofar any features, effects and benefits as described above in connection with the system equally apply to the method and vice versa.

According to another example, the method further comprises the step of determining or estimating a three-dimensional position or a three-dimensional pose of an item with at least one of the first image processor, the second image processor and the central processor on the basis of the first item specific data and the second item specific data. Generally, each one of the first image processor, the second image processor and the central processor is operable to process first and second item specific data. With such examples, wherein the first image processor is dedicated or configured to determine the three-dimensional position of three-dimensional pose of the item it is the first image processor that receives second item specific data from the second image processor via the data transmission network.

Then, the first image processor is operable and configured to combine the second item specific data and the first item specific in order to derive the three-dimensional position or three-dimensional pose of the item. The functionality of the image processor is by no way limited to the determining or estimating of a three-dimensional position or pose. Generally, the image processor may be further configured to determine or to estimate a state of movement, hence a velocity of the item as well as a momentary trajectory of the item of interest.

With other examples, the first and the second image processors may also swap roles. It is also conceivable, that it is the second image processor that provides determining or estimating of at least one of a three-dimensional position, a three-dimensional pose, a three-dimensional trajectory or a three-dimensional state of movement of the item on the basis of first and second item specific data, wherein the first item specific data is provided by the first image processor and is received by the second image processor via the data transmission network.

The same functionality may also apply to the optional central processor. Here, the central processor may be configured to receive first item specific data and second item specific data from first and second camera units via the data transmission network, respectively.

Of course, the method and the system are by no way limited to a first and a second camera unit only. The system and the method are freely scalable to a large number of camera units operable to exchange respective item specific data by the data transmission network in order to determine or to estimate three-dimensional item data, such as position, orientation, state of movement or trajectory.

With further examples, at least one of the first and second image processors may be operable to transmit respective first and second item specific data to a plurality of further image processors. In particular, the first image processor may be operable to transmit the first item specific data via the data transmission network to the second image processor, to a third image processor, to a fourth image processor or to an nₜₕ-image processor, wherein n is an integer number representing the total number of available camera units of the system for tracking the item of the sports activity.

In the same way, the second image processor may be configured to receive respective item specific data of the first camera unit, from a third camera unit, from a fourth camera unit and/or from an nₜₕ camera unit, wherein n is again an integer number representing the total number of available camera units. Here, the second image processor is also configured to process the item specific data received from some or all other camera units. The same may apply to the first camera unit and hence to the first image processor.

According to another example of the system and/or of the method only first or second item specific data is transmitted between at least two of the first camera units, the second camera unit and the central processor. Typically, image data or a sequence of images as captured by any one of the cameras of the first or second camera units may not be shared across the data transmission network. For tracking the item of the sports activity it may be generally sufficient and may be even beneficial to limit data traffic across the data transmission network between the camera units and the optional central processor to the pre-processed item specific data.

### Brief description of the drawings

In the following, numerous examples of the system and the method of tracking an item of a sports activity are illustrated in greater detail by making reference to the drawings, in which:
- Figure 1 schematically illustrates an example of a camera unit,
- Figure 2 schematically illustrates an arrangement of various camera units around a sports arena,
- Figure 3 illustrates another example of a system for tracking an item,
- Figure 4 is representative of a further example of a system for tracking an item based on a wireless communication between the system components,
- Figure 5 shows a block diagram of a camera unit in greater detail, and
- Figure 6 shows a flowchart of one example of the method of tracking an item of a sports activity.

### Detailed description

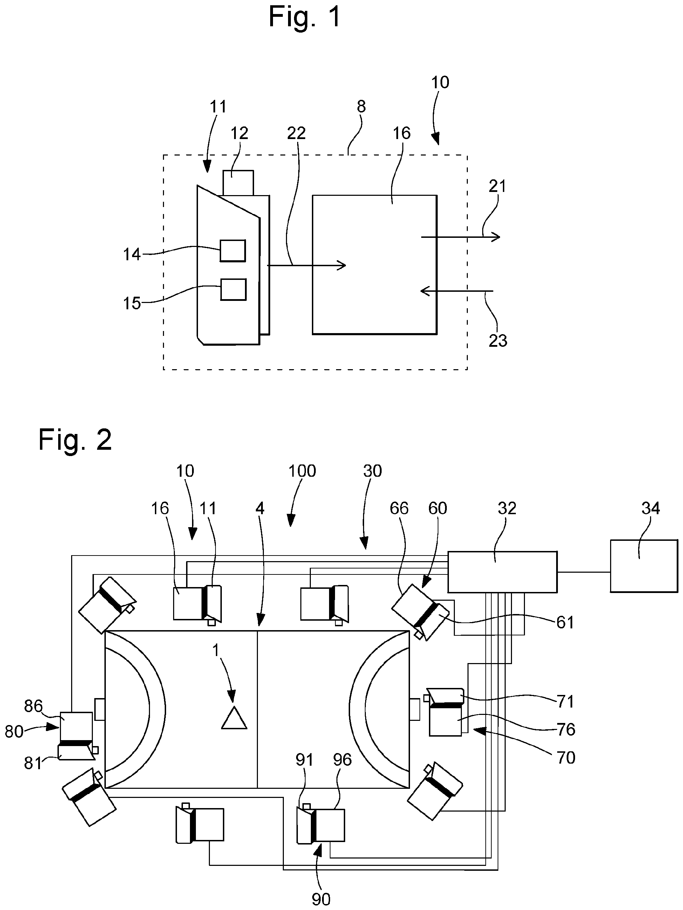

Figure 1 shows is a block diagram of an example of a camera unit 10 used for a system 100 for tracking an item 1 of a sports activity as illustrated in Figure 2. The camera unit 10 comprises a camera 11 and an image processor 16. Typically, the camera 11 comprises an objective 12 and an imaging system 14, such as an autofocus arrangement comprising one or more optical lenses. The camera 11 further comprises an image sensor 15. The image sensor 15 typically comprises an array of light-sensitive detectors. It may be implemented as a charge coupled device. The camera 12 is connected with the image processor 16. The image processor 16 is configured to receive a sequence of images captured by the camera 11. The image processor 16 is further operable to process the sequence of images and is also operable to recognize the item 1 in the sequence of images. Moreover, the image processor 16 is operable to generate item specific data on the basis of the sequence of images and/or on the basis of the item recognition.

The camera 11 is configured to generate an analog or digital datastream. This datastream is transmitted to the image processor 16 via the image input 22 of the image processor 16. The image processor 16 further comprises a data output 21 as well as a data input 23. The camera unit 10 is further configured to communicate with further camera units 60, 70, 80, 90 and/or with a central processor 34 as illustrated in Figure 2. Inter camera unit communication is provided by a data transmission network 30.

The camera unit 10 is configured to transmit item specific data to any of the further camera units 60, 70, 80, 90 and/or to the central processor 34 via the data transmission network 30. For this, the data output 21 is connected or is connectable to the data transmission network 30. In the same way or optionally, the camera units 10 may be also configured to receive item specific data from any other of the camera units 60, 70, 80, 90 and/or from the central processor 34 via the data transmission network 30 and by the data input 23. Hence, the data input 23 may be also connected or maybe connectable to the data transmission network 30.

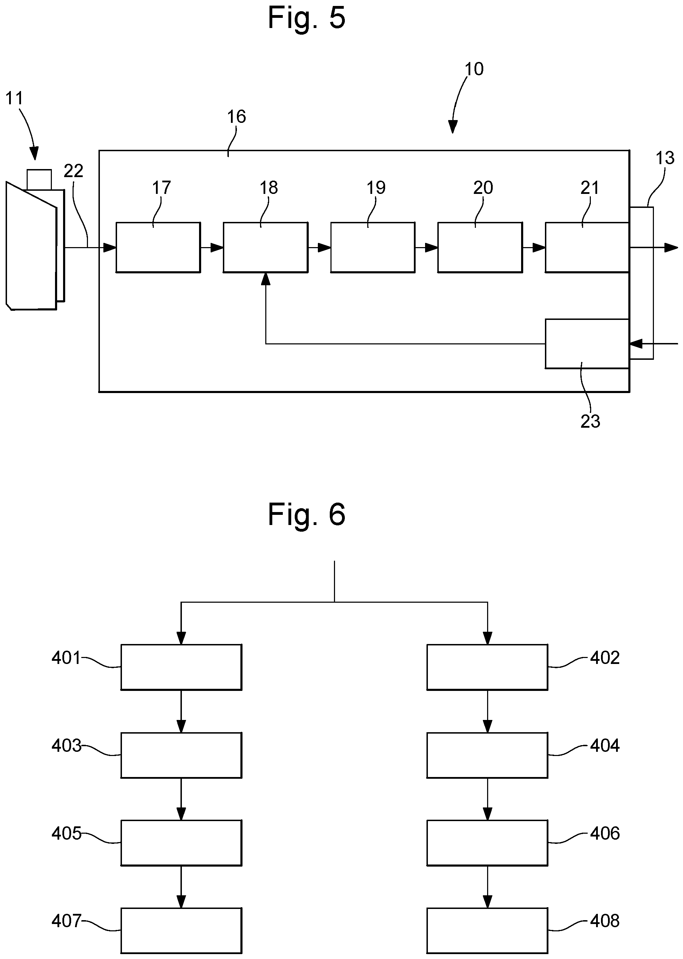

As illustrated in greater detail in Figure 5, the camera units 10 may be provided with a transducer 13. By way of the transducer 13 downstream data may be transferred from the camera unit 10 via the data output 21 to the data communication network 30. Similarly, item specific data provided by any other of the network components, such as the central processor 34 or any other of the camera units 60, 70, 80, 90 can be transmitted downstream via the data transmission network 32 to the transducer 13 and to the image processor 16 of the camera unit 10 by the transducer 13 and the data input 23.

In Figure 5, there is provided only one of a plurality of conceivable implementations of the camera unit 10. Here, the image processor 16 receives a sequence of images via the image input 22 from the camera 11. The image input 22 is connected to an image buffer 17 of the image processor 16. The image buffer 17 is typically implemented as a kind of a digital data storage. Typically, the output of the camera 11 is a digital output and the camera is configured to provide a digital datastream comprising the sequence of images.

An output of the image buffer 17 is connected to an input of a data manager 18. The data manager 18 comprises a further input connected to the data input 23 of the image processor 16. The data manager 18 is operable to manage or to combine digital data stored in and/or provided by the image buffer 17 in combination with item specific data received from other camera units 60, 70, 80, 90 via the data input 23. An output of the data manager 18 is connected to an image pre-processor 19. The image pre-processor 19 is operable to execute some type of predefined image pre-processing. An output of the image pre-processor 19 is connected to an item recognizer 20.

The combination of image pre-processor 19 and item recognizer 20 is operable to conduct at least one of image classification, object or item detection, semantic segmentation or pose estimation of the item 1 recognized in the sequence of images. The item recognition or item recognizer 20 is operable to generate item specific data, such as the position, orientation, pose, state of movement or trajectory of the item 1 of interest as recognized in the sequence of images. The item recognizer 20 is further connected to the data output 21. Due to the connection or connectivity to the data transmission network 30, the item specific data generated by the image processor 16 is transferable to the data transmission network 30. The item specific data can be therefore transmitted to any other network component, such as any other camera unit 60, 70, 80, 90 and/or to the central processor 34.

As further indicated in Figure 2, there are provided numerous camera units, e.g. a first camera unit 10, a second camera unit 60, a third camera unit 70, a fourth camera unit 80, a fifth camera unit 90 and so on. Each one of these camera units comprises a camera 11, 61, 71, 81, 91 and an associated image processor 16, 66, 76, 86, 96. As indicated with the example of the first camera unit 10 in Figure 1, the first camera 11 and the first image processor 16 may be arranged in a common housing 8. The camera unit 10 may be implemented as a smart camera. The camera 11 and the image processor 16 or components thereof may be arranged on a common printed circuit board. In this way a rather compact design and geometry for the camera units 10 can be provided. The same may also apply to at least some or to all other camera units 60, 70, 80, 90 of the presently illustrated system 100.

The numerous camera units 10, 60, 70, 80, 90 are typically arranged around a sports arena 4 or around a sports field 4, in or on which the item 1 of interest moves. In the present example the item 1 may be a person. With other examples the item 1 is a sports instrument, such as a racket or a ball of the sports activity. The arrangement of numerous camera units 10, 60, 70, 80, 90 at variable positions and in different orientations provides a full and unobstructed view of the item 1. In the event, that the item 1 should be covered by another item and could be therefore not tracked or reviewed by a particular camera unit 10 the respective item 1 may be still detectable by at least one or two further camera units 70, 80, 90.

All camera units 10, 60, 70, 80, 90 of the system 100, as illustrated in Figure 2, are mutually interconnected via the data transmission network 30. Typically, the data transmission network 30 comprises a network switch 32. The network switch 32 and/or the individual image processor 16, 66, 76, 86, 96 of the camera units 10, 60, 70, 80, 90 are provided with a clock generator. In this way, signals obtainable or generated by the individual camera rather units 10, 60, 70, 80, 90 can be easily synchronized.

In the example of Figure 2, the sequence of images provided by each one of the cameras 11, 61, 71, 81, 91 is processed or at least pre-processed on site, i.e. by the respective image processor 16, 66, 76, 86, 96 of the respective camera unit 10, 60, 70, 80, 90. In this way, each one of the camera units 10, 60, 70, 80, 90 is configured to generate item specific data, such as position, orientation, pose, state of movement or trajectory of the item 1 of interest. In order to reduce data traffic and to reduce network load, it may be only this type of condensed data, i.e. the item specific data, that is transmitted via and across the data transmission network 30.

The central processor 34 is connected to the data transmission network 30. The central processor 34 may be provided by a standard hardware component, such as a personal computer connected to the data transmission network 30. With some examples of the system 100 the central processor 34 is operable to combine item specific data received from at least two of the camera units 10, 60, 70, 80, 90. With more sophisticated examples, the central processor 34 is configured to combine item specific data received from any of the available camera units 10, 60, 70, 80, 90 concurrently or simultaneously.

The implementation of the central processor 34 may be only optional. With some examples, the system 100 may be void of a central processor 34. Then, the function of the central processor 34, hence the combination of item specific data produced and generated by at least two separate camera units 10, 60, 70, 80, 90 is provided by one of the camera units 10, 60, 70, 80, 90. For instance, the second image processor 66 of the second camera unit 60 may be configured to take over the functionality of the central processor 34. Likewise, also any other of the image processors 16, 66, 76, 86, 96 may be configured to perform the task of combining item specific data from at least two camera units 10, 60, 70, 80, 90. In this way, the central processor 34 may become substantially redundant.

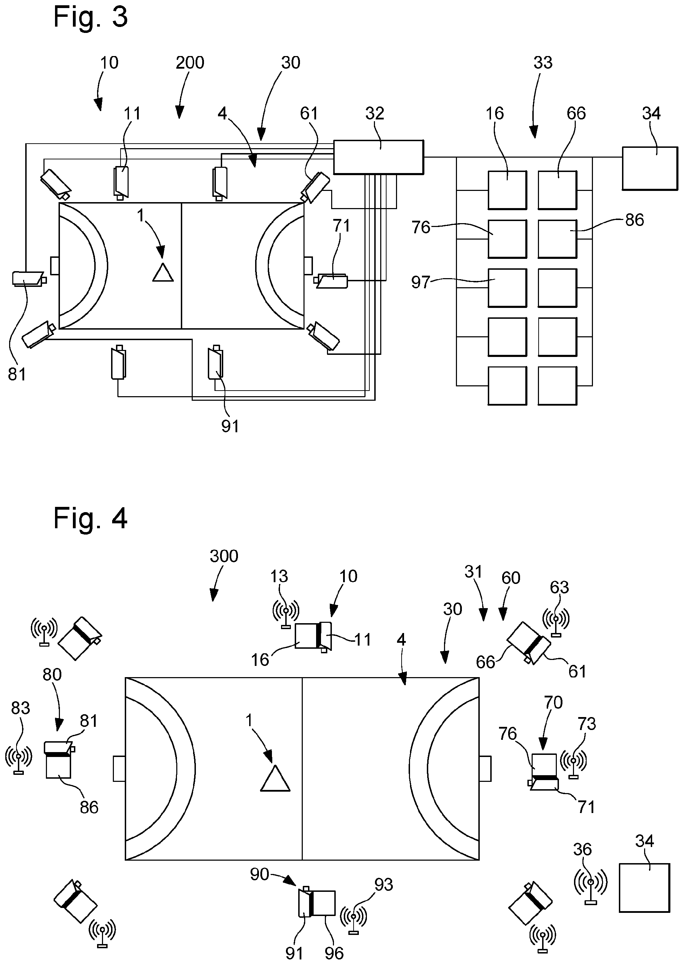

In the further example of a system 300 for tracking an item 1 of a sports activity as illustrated in Figure 4, the data transmission network 30 is implemented as a wireless network 31. Here, the first camera units 10 is provided with a wireless transducer 13. The second camera unit 60 is provided with a wireless 63. The third camera unit 70 is provided with a wireless transducer 73. The fourth camera unit 80 is provided with a wireless transducer 83 and the fifth camera unit 90 is also provided with a wireless transducer 93. A total number of five camera units is by no way limiting for the implementation of the system 300. Moreover, the total number of camera units 10, 60, 70, 80, 90 may vary dynamically. The data transmission network 30, 31 may be organized dynamically depending on the number of available camera units 10, 60, 70, 80, 90.

Since the network load or the traffic via the network 30 may be limited to the transmission of item specific data, hence to pre-processed or condensed data compared to the original stream of images the total bandwidth provided by a wireless data transmission network 31 may be sufficient to provide simultaneous, i.e. real-time data processing for tracking of the item 1. Accordingly, the implementation and hardware setup of the system 30 may simplify compared to a wired connection of numerous camera units 10, 60, 70, 80, 90 as illustrated in connection with Figure 2.

In the further example of Figure 3, there is provided another system 200 for tracking of an item 1 of a sports activity. There, the camera units 10 are implemented as logical units. Here, the first camera units 10 still comprises the first camera 11 and the first image processor 16. But now, the camera 11 and the associated image processor 16 are spatially separated from each other. The camera 11 and the image processor 16 are connected in a data transmitting manner via the data transmission network 30. Apart from that, the function or functionality of the first camera 11 and the associated first image processor 16 remains substantially on amended or identical to the functionality of these components as described above in connection with Figures 1, 2 and 5. With the example of Figure 3, there is still a one-to-one mapping or combination of one particular camera 11 with only one image processor 16 and vice versa.

As indicated in Figure 3, the numerous image processors 16, 66, 76, 86, 96 for the numerous cameras 11, 61, 71, 81, 91 are arranged in a pre-processing unit 33 which can be located remote from the individual cameras 11, 61, 71, 81, 91. Here, the sequence of images provided by each individual camera 11, 61, 71, 81, 91 has to be transmitted via the data transmission network 30 to the individual image processors 16, 66, 76, 86, 96. Also here, providing of a further central processor 34 is only optional. Its functionality may be also provided by any of the available image processors 16, 66, 76, 86, 96.

In Figure 6, a flowchart of a method of tracking an item 1 of a sports activity is schematically illustrated. Here, the consecutive steps 401, 403, 405, 407 are provided and processed by a first camera unit 10. The further steps 402, 404, 406, 408 are concurrently or simultaneously processed or executed by a second camera unit 60. In an initial step 401, the first camera 11 of the first camera unit 10 captures a first sequence of images. Concurrently, a second camera 61 of the second camera unit 60 captures a second sequence of images in step 402. In step 403, the first image processor 16 recognizes an item in the sequence of first images. Simultaneously or concurrently in step 404, the second image processor 66 recognizes the same or a different item in the second sequence of images.

In the subsequent step 405, the first image processor 16 generates item specific data. Concurrently, the second image processor 66 generates second item specific data in step 406. In step 407, the first image processor 16 transmits the first item specific data generated in step 405 to the second camera unit 60 and/or to the central processor 34. In step 408, the second image processor 66 receives first item specific data from the first image processor 16 via the data transmission network 30. Concurrently or alternatively the second processor 66 transmits the second item specific data via the data transmission network 30 to the central processor 34 in step 408.

In further steps not being illustrated here, it may be the second image processor 66 that processes and/or combines first and second item specific data to determine or estimate at least one of a position, an orientation, a pose, a state of movement or a trajectory of the item 1 in the sequence of images obtained from at least two cameras 11, 61 of numerous cameras units 10, 60, 70, 80, 90.

### Reference Numbers

- 1: item
- 4: sports arena
- 8: housing
- 10: camera unit
- 11: camera
- 12: objective
- 13: transducer
- 14: imaging system
- 15: image sensor
- 16: image processor
- 17: image buffer
- 18: data manager
- 19: image pre-processor
- 20: item recognizer
- 21: data output
- 22: image input
- 23: data input
- 24: transducer
- 30: data transmission network
- 31: wireless network
- 32: switch
- 33: pre-processing unit
- 34: central processor
- 36: transducer
- 60: camera unit
- 61: camera
- 63: transducer
- 66: image processor
- 70: camera unit
- 71: camera
- 73: transducer
- 76: image processor
- 80: camera unit
- 81: camera
- 83: transducer
- 86: image processor
- 90: camera unit
- 91: camera
- 93: transducer
- 96: image processor
- 100: system
- 200: system
- 300: system

## Claims

1. A system (100; 200; 300) for tracking an item (1) of a sports activity, the system comprising:
- a data transmission network (30),
- at least a first camera unit (10) connected to or connectable to the data transmission network (30), the first camera unit (10) comprises a first camera (11) and a first image processor (16), wherein the first camera (11) is operable to capture a sequence of images and wherein the first image processor (16) is operable to process the sequence of images and is further operable to recognize the item (1) in the sequence of images and to generate first item specific data on the basis of the item recognition,
- at least a second camera unit (60) connected to or connectable to the data transmission network (30), the second camera unit (60) comprises a second camera (61) and a second image processor (66), wherein the second camera (61) is operable to capture a sequence of images and wherein the second image processor (66) is operable to process the sequence of images and is further operable to recognize the item (1) in the sequence of images and to generate second item specific data on the basis of the item recognition,
- wherein the first image processor (16) is operable to transmit the first item specific data via the data transmission network (30) to the second image processor (66) and/or to a central processor (34) connected to the data transmission network (30).

2. The system according to claim 1, wherein the second image processor (66) is operable to transmit the second item specific data via the data transmission network (30) to at least one of the first image processor (16) and the central processor (34).

3. The system according to claim 1, wherein at least one of the first image processor (16) and the second image processor (66) is operable to transmit the first item specific data via the data transmission network without the sequence of images obtained from the first camera unit (11) or second camera unit (61).

4. The system according to claim 1, wherein at least the first camera unit (10) comprises a housing (8) and wherein the first camera (11) and the first image processor (16) are arranged inside the housing (8).

5. The system according to any one of the claims 1 to 3, wherein the first image processor (16) is located remote from the first camera (11) and wherein the first image processor (16) and the first camera (11) are connected via the data transmission network (30).

6. The system according to any one of the preceding claims, wherein at least one of the first image processor (16), the second image processor (66) and the central processor (34) is operable to determine a three-dimensional position or three-dimensional pose of the item (1) on the basis of the first item specific data and the second item specific data.

7. The system according to any one of the preceding claims, wherein generation of first item specific data or second item specific data on the basis of the captured sequence of images includes at least one of image classification, object detection, semantic segmentation or pose-estimation.

8. The system according to any one of the preceding claims, wherein the first item specific data generated by the first image processor (16) is of a first datatype and wherein the second item specific data generated by the second image processor (66) is of a second datatype, wherein the first and second datatypes are different.

9. The system according to any one of the preceding claims, wherein at least the first image processor (16) comprises an image input (22), a data output (21) and a data input (23), wherein the image input (22) is connected to the first camera (11) and wherein at least one of the data output (21) and the data input (23) is connectable with at least one of the central processor (34) and the second image processor (66) via the data transmission network (30).

10. The system according to any one of the preceding claims, wherein the data transmission network (30) is a wireless network (31) and wherein the first camera unit (10) comprises a first wireless transducer (13) and wherein the second camera unit (60) comprises a second wireless transducer (63) connected to or connectable to the wireless network (31) for transceiving first item specific data and second item specific data.

11. The system according to any one of the preceding claims, wherein the data transmission network (30) comprises a network switch (32) and wherein at least two of the first camera unit (10), the second camera unit (60) and the central processor (34) are interconnected by the network switch (32).

12. The system according to any one of the preceding claims, further comprising a clock generator and wherein at least two of the first camera unit (10), the second camera unit (60) and the central processor (34) are coupled to the clock generator via the data transmission network (30).

13. A method of tracking an item (1) of a sports activity, the method comprising:
- providing of a data transmission network (30) operable to provide data transmission between at least two of a first camera unit (10) a second camera unit (60) and a central processor (34),
- capturing of a first sequence of images with a first camera (11) of the first camera unit (10),
- processing the first sequence of images and recognizing the item in the first sequence of images with a first image processor (16) of the first camera unit (10),
- generating first item specific data with the first image processor (16) on the basis of the item recognition,
- capturing of a second sequence of images with a second camera (61) of a second camera unit (60),
- processing the second sequence of images and recognizing the item in the second sequence of images with a second image processor (66) of the second camera unit (60),
- generating second item specific data with the second image processor (66) on the basis of the item recognition, and
i) transmitting at least the first item specific data to at least one of the second camera unit (60) and the central processor (34) via the data transmission network (30), or
ii) transmitting at least the second item specific data to at least one of the first camera unit (10) and the central processor (34) via the data transmission network (30).

14. The method according to claim 13, further comprising the step of determining or estimating a three-dimensional position or a three-dimensional pose of the item (1) with at least one of the first image processor (16), the second image processor (66) and the central processor (34) on the basis of the first item specific data and the second item specific data.

15. The method according to claim 13 or 14, wherein only first or second item specific data is transmitted between at least two of the first camera unit (10), the second camera unit (60) and the central processor (34).
